# EUROPÄISCHE PATENTSCHRIFT

(11) **EP 3 501 689 B1**
(45) Veröffentlichungstag und Bekanntmachung des Hinweises auf die Patenterteilung: **07.10.2020**
(21) Anmeldenummer: 18020627.8
(22) Anmeldetag: 04.12.2018
(51) Int. Cl.: B21J 15/32, B23P 19/00, B65G 47/14, B65G 47/18

(54) **VORRICHTUNG ZUM VEREINZELN UND AUSRICHTEN VON STIFTFÖRMIGEM STÜCKGUT**
DEVICE FOR SEPARATING AND ALIGNING PIN-SHAPED GOODS
DISPOSITIF DE SÉPARATION ET D'ORIENTATION DE PIÈCES EN FORME DE TIGE

(30) Priorität: 19.12.2017 DE 102017130500
(43) Veröffentlichungstag der Anmeldung: 26.06.2019
(73) Patentinhaber: Kolodziej, Wolfgang, 49326 Melle (DE)
(72) Erfinder: Kolodziej, Jan Christopher, 49326 Melle (DE)
(74) Vertreter: Dekker, Lothar Karl Rudolf

(56) Entgegenhaltungen:
- WO-A1-2007/068129
- CN-A- 105 499 471
- GB-A- 2 252 964
- US-A- 3 415 915
- US-A- 4 507 039

## Beschreibung

Die vorliegende Erfindung betrifft eine Vorrichtung zum Vereinzeln und Ausrichten von stiftförmigem, einen Kopf und einen Schaft aufweisendem Stückgut, insbesondere Nieten, gemäß dem Oberbegriff des Anspruches 1.

Eine gattungsgemäße Vorrichtung ist aus der WO 2007/068129 A1 bekannt. Die aus der WO 2007/068129 A1 bekannte Vorrichtung umfasst ein trichterförmiges Behältnis zur Aufnahme von Stückgut, mit einer Vorderwand und einer Rückwand, die einander gegenüberliegend und jeweils zur Vertikalen unter einem Winkel nach außen geneigt angeordnet sind, sowie zumindest zwei sich zwischen der Vorderwand und der Rückwand ersteckenden Seitenwänden. Innerhalb einer Ausnehmung in der Vorderwand ist ein angetriebenes Förderband angeordnet, das unter einem gleichen Winkel wie die Vorderwand zur Vertikalen geneigt angeordnet ist und das Stückgut, Vorformlinge von Kunststofflaschen oder Schrauben, von einer Annahmeebene im Behältnis auf eine höher gelegene Abgabeebene fördert. Dabei soll mittels des Förderbandes, welches durch sich über die Breite des Förderbandes erstreckende Mitnehmerin einzelne Abschnitte unterteilt ist, das Stückgut einzeln aus dem Behältnis entnommen werden. Dies ist bei den Vorformlingen von Kunststofflaschen darstellbar, da diese aufgrund ihrer Größe und Form einfach zu separieren sind. Stiftförmiges, einen Kopf und einen Schaft aufweisendes Stückgut, wie Schrauben, sind in der Regel in ihren Abmessungen erheblich kleiner und neigen aufgrund ihrer Kontur dazu, sich ineinander zu verhaken, was eine Vereinzelung durch das Förderband zumindest sehr stark erschwert, da die Abschnitte zwischen den Mitnehmern in der Regel mehr als eine Schraube aufnehmen und abfördern.

Es ist Aufgabe der vorliegenden Erfindung eine Vorrichtung zum Vereinzeln und Ausrichten von stiftförmigem, einen Kopf und einen Schaft aufweisendem Stückgut in der Weise weiterzubilden, dass diese sich durch einen vereinfachten und kostengünstigeren Aufbau auszeichnet.

Diese Aufgabe wird erfindungsgemäß durch die Merkmale des Anspruches 1 gelöst. Vorteilhafte Weiterbildungen sind Gegenstand der Unteransprüche.

Gemäß Anspruch 1 wird eine Vorrichtung zum Vereinzeln und Ausrichten von stiftförmigem, einen Kopf und einen Schaft aufweisendem Stückgut, insbesondere Nieten, vorgeschlagen. Die Vorrichtung umfasst ein im Wesentlichen trichterförmiges Behältnis zur Aufnahme des Stückguts, mit zwei Wandabschnitten, die das Behältnis in seinem vorderen Bereich begrenzen, und einer Rückwand, wobei die Wandabschnitte und die Rückwand einander abschnittsweise gegenüberliegend und jeweils zur Mittelquerebene des Behältnisses unter einem Winkel nach außen geneigt angeordnet sind. Das Behältnis weist ein unterhalb einer, insbesondere schlitzförmigen, Ausnehmung, welche die Wandabschnitte zueinander beabstandet, angeordnetes endlos umlaufendes Fördermittel auf, welches Stückgut von einer Annahmeebene auf eine höher gelegene Abgabeebene fördert. Das endlos umlaufende Fördermittel weist eine mit Mitnehmern versehene Förderebene auf. Zum Vereinzeln und Ausrichten des stiftförmigen, einen Kopf und einen Schaft aufweisenden Stückgutes ist vorgesehen, dass die schlitzförmige Ausnehmung von zueinander parallel verlaufenden Vorderkanten der V-förmig auf das Fördermittel zulaufend angeordneten Wandabschnitte begrenzt ist und die Vorderkanten oberhalb des Fördermittels oder in einer Ebene mit dem Fördermittel münden, und dass die Mitnehmer als in Umlaufrichtung des Fördermittels zueinander beabstandet angeordnete zylindrische Stifte ausgebildet sind, die sich im Wesentlichen senkrecht zu der Förderebene des Fördermittels erstrecken. Die Wandabschnitte weisen bezüglich der Mittelquerebene eine erste Neigung auf, so dass zwischen der Rückwand und den Wandabschnitten ein erster Winkel eingeschlossen wird. Bezüglich einer Längsachse der Ausnehmung weisen die Wandabschnitte eine zweite Neigung auf, so dass zusätzlich zwischen den einander gegenüberliegenden, durch die Ausnehmung beabstandeten Wandabschnitte ein zweiter Winkel eingeschlossen wird, der kleiner als 90° ist. Das Fördermittel erfasst das im Behältnis obenauf liegende Stückgut, insbesondere Nieten, welches zumindest abschnittsweise auf das Fördermittel ragt. Die Mitnehmer erfassen das Stückgut und fördern es ab. Dabei bewirkt die zusätzliche Neigung der Wandabschnitte unter dem zweiten Winkel, dass sich das Stückgut in Längsrichtung orientiert. Zudem tritt der Effekt auf, dass Stückgut, welches nur von dem Fördermittel bzw. dessen Mitnehmern erfasstem Stückgut mitgezogen wird, d.h. keinen unmittelbaren Kontakt mit den Mitnehmern des Fördermittels hat, sich von diesem löst und in das Behältnis zurückrutscht. Bevorzugt kann das vereinzelte Stückgut nach dem Passieren der Abgabeebene unmittelbar an eine nachgeordnete Vorrichtung zum Magazinieren übergeben werden.

Dabei sollte die Breite der schlitzförmigen Ausnehmung zwischen den Wandabschnitten mindestens der Breite der Mitnehmer und höchstens der Länge des Stückgutes entsprechen. Hierdurch lässt sich ein Verkeilen des Stückgutes zwischen den Vorderkanten der Wandabschnitte und dem Fördermittel vermeiden. Besonders vorteilhaft ist es, wenn die Breite der Ausnehmung im Wesentlichen der Breite der Mitnehmer entspricht, die kleiner als der Kopfdurchmesser des Stückgutes ist. Dadurch lässt sich erreichen, dass der Kopf des Stückgutes von dem Mitnehmer erfasst werden kann, wobei der Kopf selbst jedoch nicht auf dem Fördermittel aufliegt, sondern auf den Wandabschnitten, welche die Ausnehmung begrenzen.

Gemäß einer bevorzugten Weiterbildung können die Mitnehmer einen kreiszylindrischen oder polygonalen Querschnitt aufweisen. Die Mitnehmer auf dem Fördermittel sorgen beim Durchlaufen der Ausnehmung im Trichter für eine permanente Bewegung des Stückgutes im Behältnis. Auf diese Weise kann der Effekt eines sich ausbildenden Gewölbes oder Tunnels im Bereich der Ausnehmung oberhalb des Fördermittels während des kontinuierlichen Abtransportes des Stückgutes vermieden werden, da einzelnes Stückgut in Richtung der Ausnehmung nachrutscht.

Vorteilhaft ist es, wenn die Mitnehmer in Umlaufrichtung des Fördermittels wechselweise zur Längsachse des Fördermittels versetzt zwischen dessen Randbereich und der Längsachse sind. Hierdurch kann vermieden werden, dass sich zusammenhängende Ketten aus Stückgut bilden können, die von dem endlos umlaufenden Fördermittel abgefördert werden.

Insbesondere kann von dem Fördermittel auf die Abgabeebene gefördertes Stückgut an eine nachgeordnete, unter einem Winkel zur Horizontalen geneigt angeordnete Rutsche übergeben werden. Hierzu kann die Rutsche zumindest eine Rinne oder zwei nebeneinander verlaufende Rinnen mit einem im Wesentlichen U-förmigen Profil aufweisen, wobei der Querschnitt der jeweiligen Rinne breiter als der Kopf und schmaler als die Länge des Schafts ist. Die Anzahl der Rinnen der Rutsche kann in Abhängigkeit von der Ausgestaltung des Fördermittels gewählt sein. Insbesondere kann dies von der Anordnung der Mitnehmer auf dem Fördermittel abhängen.

Bevorzugt kann die Neigung des Fördermittels größer oder gleich 30° und kleiner oder gleich 60° sein. Entsprechend der Neigung des Fördermittels und der daraus resultierenden Änderung des zweiten Winkels unter dem die Wandabschnitte zueinander geneigt sind, lässt sich die Größenordnung des Durchsatzes an abgefördertem Stückgut aus dem Behältnis variieren. Insbesondere kann die Einstellung der Neigung des Fördermittels in Abhängigkeit von der Geometrie des Stückgutes erfolgen.

Weiterhin kann sich die Ausnehmung im Wesentlichen vom tiefsten Punkt des Behältnisses bis zum oberen Rand der Wandabschnitte erstrecken. Die mit den im Wesentlichen stiftförmigen Mitnehmern versehene Förderebene des Fördermittels sorgt somit dafür, dass der sich zum tiefsten Punkt des Behältnisses verjüngende Schüttkegel aus Stückgut stets eine Durchmischung und Auflockerung erfährt, um eine Gewölbebildung, das heißt eine abschnittsweise Aushöhlung oder Tunnelbildung im Schüttgutkegel, zu vermeiden, dessen Bildung die Mitnahme von Stückgut durch das Fördermittel verhindert. Zudem lässt sich durch diese Anordnung eine vollständige oder nahezu vollständige Entleerung des Behältnisses erreichen.

Gemäß einer bevorzugten Weiterbildung kann sich der Abstand zwischen zwei Rinnen in Längsrichtung der Rutsche vom Annahmebereich zum Abgabebereich aufweiten.

Damit kann eine Anpassung an eine Förderbreite von der Rutsche nachgeordneten Vorrichtungen erreicht werden.

Des Weiteren kann zur Verbesserung der Gleiteigenschaften der zumindest einen Rinne eine die Haftreibung minimierende Beschichtung aufweisen, so dass das Stückgut weitgehend störungsfrei die zumindest eine Rinne durchlaufen kann.

Gemäß einer bevorzugten Ausführung kann vorgesehen sein, dass eine Sensoranordnung in der Abgabeebene bzw. auf Höhe der Abgabeebene oder der Abgabeebene nachgeordnet angeordnet ist, welche zur Erfassung von geometrischen Eigenschaften des Stückgutes eingerichtet ist. Mittels der Sensoranordnung kann das vereinzelte Stückgut hinsichtlich der Einhaltung von vorgebbaren geometrischen Abmessungen überwacht werden. Die Sensoranordnung ist zur optischen Erfassung der geometrischen Abmessungen des Stückguts, insbesondere von Nieten, eingerichtet.

Insbesondere kann das Fördermittel durch einen Aktor elektromechanisch antreibbar sein. Der Aktor kann als Elektromotor ausgebildet sein, der mit einer Umlenkrolle des Fördermittels trieblich verbunden ist. Hierbei kann der Elektromotor in die Umlenkrolle integriert sein. Dabei kann die Umlenkrolle als Rotor des Elektromotors ausgeführt sein. Bevorzugt kann der Elektromotor als Schrittmotor ausgeführt sein. Hierdurch lässt sich eine präzise Ansteuerung gewährleisten, da die jeweilige Position bei einem Starten und Stoppen des Schrittmotors bekannt ist. Somit kann das Aussortieren von Stückgut ermöglicht werden, welches von der Sensoranordnung aufgrund abweichender geometrischer Abmessungen identifiziert wurde. Bevorzugt kann die Aussortierung automatisch erfolgen.

Alternativ kann das Fördermittel mechanisch oder pneumatisch antreibbar sein. Insbesondere der pneumatische Antrieb des Fördermittels ist vorteilhaft, da dieser weitgehend verschleißfrei betreibbar ist. Dies ist vor dem Hintergrund eines wiederholten Startens und Stoppens des Fördermittels vorteilhaft, um Stückgut aussortieren zu können, welches vorgegebenen geometrischen Abmessungen nicht entspricht.

Vorteilhaft ist weiterhin, dass die Fördergeschwindigkeit des endlos umlaufenden Fördermittels einstellbar ist. Hierdurch lässt sich eine bedarfsgerechte Anpassung an das zu fördernde Stückgut als auch einen Durchsatz einstellen.

Weiterhin kann der Rutsche eine Fördervorrichtung nachgeordnet sein, welche das von der Rutsche kommende Stückgut mit einer von der Antriebsgeschwindigkeit des im Behältnis angeordneten Fördermittels abhängigen Fördergeschwindigkeit abtransportiert.

Bevorzugt kann das endlos umlaufende Fördermittel als ein Förderband oder eine Gliederkette ausgebildet sein. Der obere Trum des Förderbandes bildet dabei die Förderebene aus.

Hierbei kann die Fördervorrichtung trieblich mit dem Fördermittel gekoppelt sein. Die Fördervorrichtung kann als ein weiteres, um Umlenkrollen endlos umlaufendes Förderband mit einer Förderfläche ausgebildet sein. Zum Antreiben kann ein der Umlenkrollen des im Behältnis angeordneten Förderbandes durch einen Riementrieb mit einer der Umlenkrollen der Fördervorrichtung verbunden sein.

Vorteilhafterweise kann zur Unterteilung einer Förderfläche der Fördervorrichtung in zwei zueinander beabstandete, parallele Förderabschnitte, die an den im Abgabebereich zweier Rinnen zueinander bestehenden Abstand angepasst sind, zumindest ein Separationselement vorgesehen sein.

Die vorliegende Erfindung wird nachstehend anhand eines in den Zeichnungen dargestellten Ausführungsbeispieles näher erläutert.

Es zeigen:
- Fig. 1: eine perspektivische Ansicht einer Vereinzelungsvorrichtung;
- Fig. 2: eine isometrische Ansicht eines Behältnisses der Vereinzelungsvorrichtung;
- Fig. 3: eine Ansicht von oben in das Behältnis gemäß Fig. 2;
- Fig. 4: eine Ansicht auf eine schematisch dargestellte Förderfläche eines Förderbandes der Vereinzelungsvorrichtung;
- Fig. 5: eine alternative Ausgestaltung eines als Förderband ausgeführten Fördermittels.

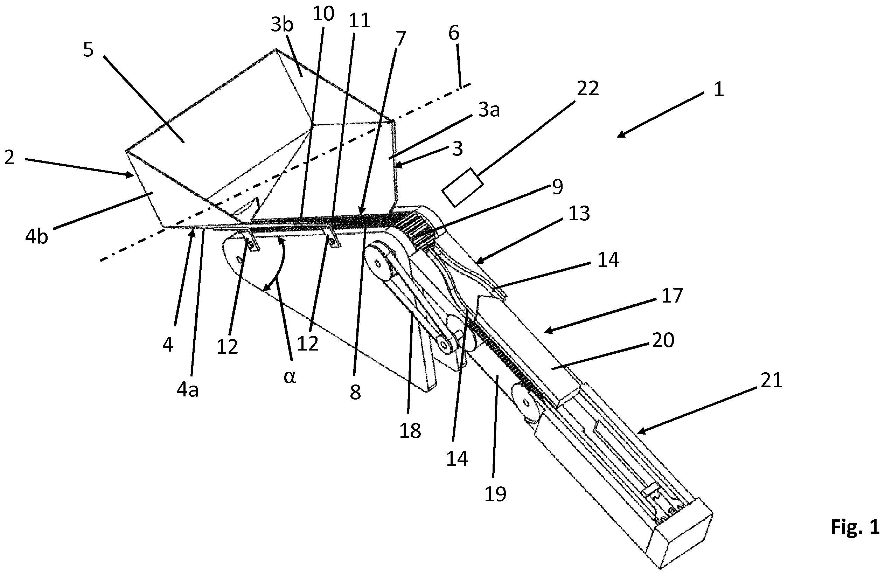

Fig. 1 zeigt eine perspektivische Ansicht einer Vereinzelungsvorrichtung 1 zum Vereinzeln und Ausrichten von stiftförmigem, einen Kopf und einen Schaft aufweisendem Stückgut, insbesondere Nieten. Die Vorrichtung 1 umfasst ein im Wesentlichen trichterförmiges Behältnis 2 zur Aufnahme des als Nieten ausgeführten Stückguts. Das Behältnis 2 weist zwei Wandabschnitte 3, 4 auf, die das Behältnis 2 in einem vorderen Bereich und seitlich abschnittsweise begrenzen, sowie eine Rückwand 5, welche das Behältnis 2 in einem hinteren Bereich begrenzt. Die sich zwischen den Wandabschnitten 3, 4 erstreckende Rückwand 5 beabstandet die beiden Wandabschnitte 3, 4 im rückwärtigen Bereich zueinander. Die Wandabschnitte 3, 4 und die Rückwand 5 sind abschnittsweise einander gegenüberliegend und jeweils zu einer gedachten Mittelquerebene 6 des Behältnisses 2 unter einem Winkel nach außen geneigt angeordnet, sodass sich die im Wesentlichen trichterförmige Ausgestaltung des Behältnisses 2 ergibt.

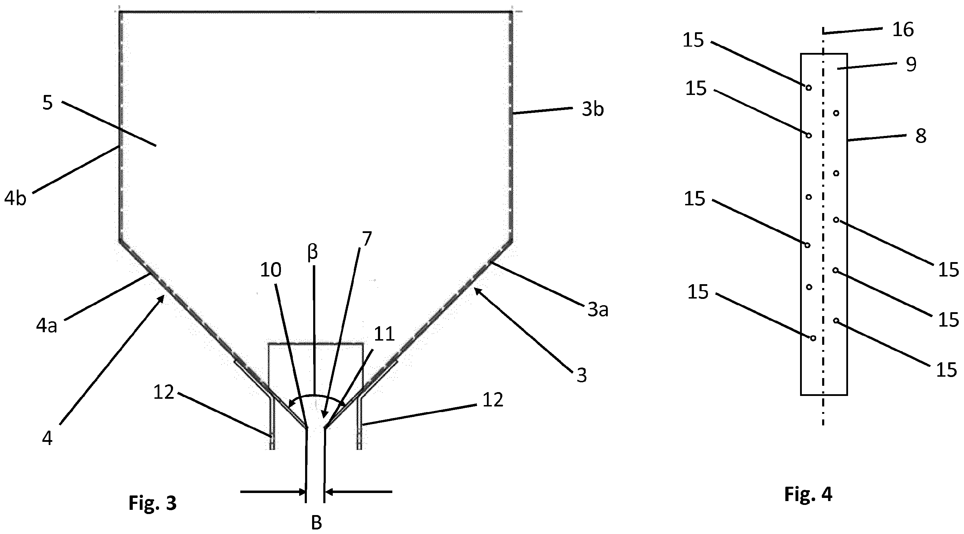

Die beiden Wandabschnitte 3 und 4 sind im vorderen Bereich durch eine durchgehende, insbesondere schlitzförmige, Ausnehmung 7 zueinander beabstandet, welche sich vom tiefsten Punkt des Behältnisses 2 bis zum oberen Rand der Wandabschnitte 3, 4 erstreckt. Die beiden Wandabschnitte 3, 4 weisen jeweils ein vorderes Segment 3a, 4a und ein hinteres Segment 3b, 4b auf. Die vorderen Segmente 3a, 4a erstecken sich ausgehend von der Ausnehmung 7 abschnittsweise in Richtung der Rückwand 5. An die vorderen Segment 3a, 4a schließen sich die hinteren Segmente 3b, 4b, welche zu den vorderen Segmenten 3a, 4a unter einem Winkel geneigt ausgeführt sind. Die hinteren Segmente 3b, 4b erstrecken sich bis zu der Rückwand 5 und sind unter einem Winkel von etwa 90° geneigt zu der Rückwand 5 angeordnet. Die vorderen Segmente 3a, 4a weisen bezüglich einer Längsachse der Ausnehmung 7 eine Neigung β auf, wie aus der Darstellung in Fig. 4 ersichtlich ist.

Parallel zu der Ausnehmung 7 ist unterhalb der Wandabschnitte 3 und 4 ein endlos umlaufendes als Förderband 8 ausgebildetes Fördermittel angeordnet, welches um zueinander beabstandet angeordnete - nicht näher dargestellte - Umlenkrollen umläuft. Das Fördermittel kann auch als eine Gliederkette ausgebildet sein, welches um korrespondierende Ritzel umläuft. Das Förderband 8 ist unter einem gleichen Winkel α wie die Wandabschnitte 3, 4 zur Mittelquerebene 6 geneigt angeordnet. Das Förderband 8 fördert das Stückgut aus dem Behältnis 2 von einer Annahmeebene im Inneren des Behältnisses 2 auf eine höher gelegene Abgabeebene oberhalb des Behältnisses 2. Die Annahmeebene ist variabel, da sich durch den jeweiligen Füllstand des Behältnisses 2 definiert. Die Abgabeebene bildet der obere Umlenkpunkt des Förderbandes 8. Zur Mitnahme des Stückgutes ist das Förderband 8 auf seiner als oberer Trum gebildeten Förderfläche 9 mit Mitnehmern 13 versehen. Das Förderband 8 weist eine Neigung α auf, welche größer oder gleich 30° und kleiner oder gleich 60° ist. In der Abgabeebene bzw. auf Höhe der Abgabeebene oder dieser nachgeordnet ist eine Sensoranordnung 22 positioniert, die der optischen Erfassung von geometrischen Abmessungen des vereinzelten Stückgutes dient. Mittels der Sensoranordnung 22 wird Stückgut mit von einer vorgebaren geometrischen Abmessung abweichenden Abmessung identifiziert, wodurch ein, insbesondere automatisiertes, Aussortieren des identifizierten Stückgutes ermöglicht wird. Die Sensoranordnung 22 ist signaltechnisch mit einer - nicht dargestellten - Steuerungsvorrichtung verbunden, welche die von der Sensoranordnung 22 generierten Signale auswertet. In Abhängigkeit vom Ergebnis der Auswertung kann die Steuerungsvorrichtung der Ansteuerung des, insbesondere automatisierten, Aussortierens dienen. Im einfachsten Fall erfolgt eine Unterbrechung der Förderung des Stückgutes durch ein Stoppen des Förderbandes 8. Somit kann das zuletzt vereinzelte Stückgut, dessen geometrische Abmessung von der vorgegebenen geometrischen Abmessung abweicht, manuell oder automatisiert entfernt werden.

Die Ausnehmung 7 ist von zueinander parallelen Vorderkanten 10, 11 der V-förmig auf das Förderband 8 zulaufend angeordneten Wandabschnitte 3, 4 begrenzt. Die Vorderkanten 10 und 11 münden oberhalb des Förderbandes 8 oder in einer Ebene mit der Förderfläche 9 des Förderbandes 8. Zur Befestigung an einem das Förderband 8 aufnehmenden Gestell 13 sind Laschen 12 vorgesehen. Das Gestell 13 nimmt eine Aktorik zum Antreiben einer der Umlenkrollen auf, um das Förderband 8 endlos umlaufend anzutreiben. Die Neigung der Vorderkanten 10, 11, welche die, insbesondere schlitzförmige, Ausnehmung 7 begrenzen, korrespondiert mit der Neigung α des Förderbandes 8. Der Antrieb der Umlenkrolle kann elektromechanisch, beispielsweise durch einen Schrittmotor, mechanisch oder pneumatisch erfolgen. Für das Aussortieren von Stückgut, welches den vorgegebenen geometrischen Abmessungen nicht entspricht, wird der Antrieb der Umlenkrolle kurzzeitig unterbrochen.

An die Abgabeebene schließt sich eine Rutsche 13 an. Die Rutsche 13 weist zwei Rinnen 14 auf, an die das Stückgut, d.h. die Nieten, von dem Förderband 8 übergeben wird. Die Rinnen 14 weisen ein im Wesentlichen U-förmiges Profil auf. Der Querschnitt der Rinnen 14 ist breiter als der Kopf und schmaler als die Länge des Schafts der Nieten, die vereinzelt werden sollen. Der Abstand zwischen den Rinnen 14 weitet sich in Längsrichtung der Rutsche vom Annahmebereich zum Abgabebereich auf. Die Rinnen 14 weisen eine die Haftreibung minimierende Beschichtung auf.

Der Rutsche 13 ist eine Fördervorrichtung 17 nachgeordnet, welche das von der Rutsche 13 kommende Stückgut mit einer von der Antriebsgeschwindigkeit des im Behältnis 2 angeordneten Förderbandes 8 abhängigen Fördergeschwindigkeit abtransportiert.

Hierbei ist die Fördervorrichtung 17 trieblich mit dem Förderband 8 gekoppelt. Die Fördervorrichtung 17 kann als ein weiteres, um Umlenkrollen endlos umlaufendes Förderband 19 mit einer Förderfläche ausgebildet sein. Zum Antreiben kann eine der Umlenkrollen des im Behältnis 2 angeordneten Förderbandes 8 durch einen Riementrieb 18 mit einer der Umlenkrollen der Fördervorrichtung 17 verbunden sein.

Zur Unterteilung einer Förderfläche der Fördervorrichtung 17 in zwei zueinander beabstandete, parallele Förderabschnitte, die an den im Abgabebereich der beiden Rinnen 14 zueinander bestehenden Abstand angepasst sind, ist zumindest ein Separationselement 20 vorgesehen.

An die Fördervorrichtung 17 schließt sich im dargestellten Ausführungsbeispiel eine Ausgabevorrichtung 21 an, welche eine einzelne Entnahme der Nieten ermöglicht.

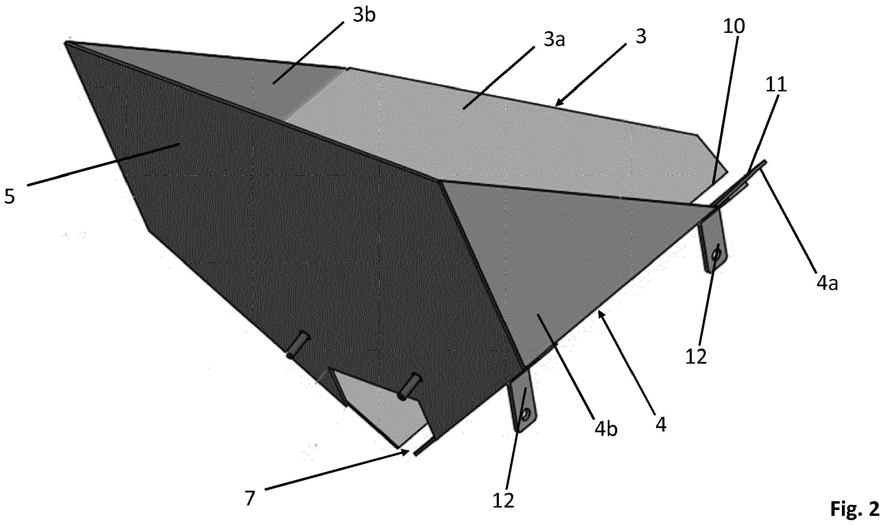

Die Darstellung in Fig. 2 zeigt eine isometrische Ansicht des Behältnisses 2 der Vereinzelungsvorrichtung 1. In Fig. 3 ist eine Ansicht von oben in das Behältnis 2 dargestellt. Die Ausnehmung 7 weist eine Breite B auf, welche mindestens der Breite der Mitnehmer 15 und höchstens der Länge des Stückgutes entspricht.

In Fig. 4 ist eine Ansicht auf die schematisch dargestellte Förderfläche 9 des Förderbandes 8 der Vereinzelungsvorrichtung 1 dargestellt. Die Mitnehmer 15 sind beidseitig zur Längsachse 16 des Förderbandes 8 zwischen einem jeweiligen Randbereich und der Längsachse 16 angeordnet. In Längsrichtung des Förderbandes 8 sind die Mitnehmer 15 wechselseitig versetzt zueinander angeordnet. Die Mitnehmer 15 sind als zylindrische Stifte ausgebildet, die sich im Wesentlichen senkrecht zur Förderfläche 9 des Förderbandes 8 erstrecken. Dabei können die Mitnehmer 15 einen kreisförmigen oder polygonalen Querschnitt aufweisen.

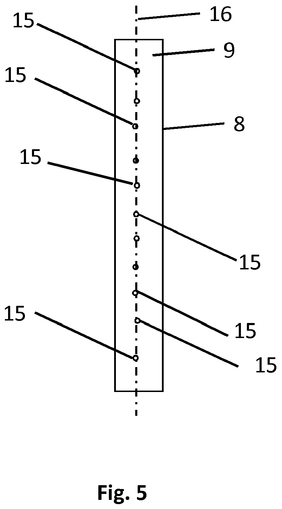

Fig. 5 zeigt eine alternative Ausgestaltung des als Förderband 8 ausgeführten Fördermittels. Das Förderband 8a ist schmaler als das in Fig. 4 dargestellte Förderband 8 ausgeführt. In Längsrichtung des Förderbandes 8a sind die Mitnehmer 15 fluchtend hintereinander angeordnet. Diese Ausführungsform des Fördermittels beschränkt die Mitnahme des stiftförmigen Stückguts auf ein einzelnes Element im Bereich des jeweiligen Mitnehmers 15.

In Abhängigkeit von der Ausgestaltung des Förderbandes 8 bzw. 8a gemäß den Fig. 4 bzw. 5 weist die Rutsche 13 zwei bzw. im Fall des Förderbandes 8a nur eine Rinne 14 auf.

### Bezugszeichenliste

- 1: Vereinzelungsvorrichtung
- 2: Behältnis
- 3: Wandabschnitt
- 3a: Vorderes Segment
- 3b: Hinteres Segment
- 4a: Vorderes Segment
- 4b: Hinteres Segment
- 5: Rückwand
- 6: Mittelquerebene
- 7: Ausnehmung
- 8: Förderband
- 9: Förderfläche
- 10: Vorderkante
- 11: Vorderkante
- 12: Lasche
- 13: Rutsche
- 14: Rinne
- 15: Mitnehmer
- 16: Längsachse von 8
- 17: Fördervorrichtung
- 18: Riementrieb
- 19: Förderband
- 20: Separationselement
- 21: Ausgabevorrichtung
- 22: Sensoranordnung
- α: Neigung
- β: Neigung
- B: Breite von 7

## Patentansprüche

1. Vorrichtung (1) zum Vereinzeln und Ausrichten von stiftförmigem, einen Kopf und einen Schaft aufweisendem Stückgut, insbesondere Nieten, umfassend:
- ein im Wesentlichen trichterförmiges Behältnis (2) zur Aufnahme des Stückguts, mit zwei Wandabschnitten (3, 4), die das Behältnis (2) in einem vorderen Bereich begrenzen, und einer Rückwand (5), wobei die Wandabschnitte (3, 4) und die Rückwand (5) abschnittsweise einander gegenüberliegend und jeweils zur Mittelquerebene (6) des Behältnisses (2) unter einem Winkel nach außen geneigt angeordnet sind;
- ein unterhalb einer, insbesondere schlitzförmigen, Ausnehmung (7), welche die beiden Wandabschnitte (3, 4) beabstandet, angeordnetes endlos umlaufendes Fördermittel (8), das unter einem gleichen Winkel (a) wie die Wandabschnitte (3, 4) zur Mittelquerebene (6) geneigt angeordnet ist und das Stückgut von einer Annahmeebene auf eine höher gelegene Abgabeebene fördert;
- wobei das Fördermittel (8) eine mit Mitnehmern (15) versehene Förderebene (9) aufweist;
**dadurch gekennzeichnet,**
- **dass** die Ausnehmung (7) von zueinander parallelen Vorderkanten (10, 11) der V-förmig auf das Fördermittel (8) zulaufend angeordneten Wandabschnitte (3, 4) begrenzt ist, welche oberhalb des Fördermittels (8) oder in einer Ebene mit dem Fördermittel (8) münden; und
- **dass** die Mitnehmer (15) als in Umlaufrichtung des Fördermittels (8) zueinander beabstandet angeordnete zylindrische Stifte ausgebildet sind, die sich im Wesentlichen senkrecht zur Förderebene (9) des Fördermittels (8) erstrecken.

2. Vorrichtung (1) nach Anspruch 1, **dadurch gekennzeichnet, dass** die Ausnehmung (7) zwischen den Wandabschnitten (3, 4) eine Breite (B) aufweist, die mindestens der Breite der Mitnehmer (15) und höchstens der Länge des Stückgutes entspricht.

3. Vorrichtung (1) nach einem der Ansprüche 1 oder 2, **dadurch gekennzeichnet, dass** die Mitnehmer (15) einen kreisförmigen oder polygonalen Querschnitt aufweisen.

4. Vorrichtung (1) nach einem der Ansprüche 1 bis 3, **dadurch gekennzeichnet, dass** die Mitnehmer (15) in Umlaufrichtung des Fördermittels (8) wechselweise zur Längsachse (16) des Fördermittels (8) versetzt zwischen dessen Randbereich und der Längsachse (16) angeordnet sind.

5. Vorrichtung (1) nach einem der Ansprüche 1 bis 4, **dadurch gekennzeichnet, dass** von dem Fördermittel (8) auf die Abgabeebene gefördertes Stückgut an eine nachgeordnete, unter einem Winkel zur Horizontalen geneigt angeordnete Rutsche (13) übergeben wird, die zumindest eine Rinne (14) mit einem im Wesentlichen U-förmigen Profil aufweist, wobei der Querschnitt der Rinne (14) breiter als der Kopf und schmaler als die Länge des Schafts ist.

6. Vorrichtung (1) nach Anspruch 1 bis 5, **dadurch gekennzeichnet, dass** die Neigung des Fördermittels (8) größer oder gleich 30° und kleiner oder gleich 60° ist.

7. Vorrichtung (1) nach einem der Ansprüche 1 bis 6, **dadurch gekennzeichnet, dass** sich die Ausnehmung (7) im Wesentlichen vom tiefsten Punkt des Behältnisses (2) bis zum oberen Rand der Wandabschnitte (3, 4) erstreckt.

8. Vorrichtung (1) nach einem der Ansprüche 5 bis 7, **dadurch gekennzeichnet, dass** die zumindest eine Rinne (14) eine die Haftreibung minimierende Beschichtung aufweist.

9. Vorrichtung (1) nach einem der Ansprüche 1 bis 8, **dadurch gekennzeichnet, dass** eine Sensoranordnung (22) in der Abgabeebene bzw. auf Höhe der Abgabeebene oder der Abgabeebene nachgeordnet angeordnet ist, welche zur Erfassung von geometrischen Eigenschaften des Stückgutes eingerichtet ist.

10. Vorrichtung (1) nach einem der Ansprüche 1 bis 9, **dadurch gekennzeichnet, dass** das Fördermittel (8) durch einen Aktor elektromechanisch antreibbar ist.

11. Vorrichtung (1) nach einem der Ansprüche 1 bis 9, **dadurch gekennzeichnet, dass** das Fördermittel (8) mechanisch oder pneumatisch antreibbar ist.

12. Vorrichtung (1) nach einem der Ansprüche 5 bis 11, **dadurch gekennzeichnet, dass** der Rutsche (13) eine Fördervorrichtung (17) nachgeordnet ist, welches das von der Rutsche (13) kommende Stückgut mit einer von der Antriebsgeschwindigkeit des im Behältnis (2) angeordneten Fördermittels (8) abhängigen Fördergeschwindigkeit abtransportiert.

13. Vorrichtung (1) nach einem der Ansprüche 1 bis 12, **dadurch gekennzeichnet, dass** das Fördermittel als Förderband (8) oder Gliederkette ausgebildet ist.

14. Vorrichtung (1) nach Anspruch 12 oder 13, **dadurch gekennzeichnet, dass** das die Fördervorrichtung (17) trieblich mit dem Fördermittel (8) gekoppelt ist.

15. Vorrichtung (1) nach einem der Ansprüche 12 bis 14, **dadurch gekennzeichnet, dass** zur Unterteilung einer Förderfläche der Fördervorrichtung (17) in zwei zueinander beabstandete, parallele Förderabschnitte, die an den im Abgabebereich zweier Rinnen (14) zueinander bestehenden Abstand angepasst sind, zumindest ein Separationselement (20) vorgesehen ist.

## Claims

1. Apparatus (1) for separating and orienting pin-shaped piece goods, in particular rivets, having a head and a shank, comprising:
- a substantially funnel-shaped container (2) for receiving the piece goods, having two wall portions (3, 4), which delimit the container (2) in a front region, and a rear wall (5), wherein the wall portions (3, 4) and the rear wall (5) are arranged opposite one another in certain portions and in each case so as to be inclined outwardly at an angle to the centre transverse plane (6) of the container (2);
- an endlessly circulating conveying means (8) which is arranged below an, in particular slot-shaped, aperture (7) which spaces apart the two wall portions (3, 4), said conveying means being arranged at an inclination to the centre transverse plane (6) at the same angle (a) as the wall portions (3, 4) and conveying the piece goods from a receiving plane to a higher discharge plane;
- wherein the conveying means (8) has a conveying plane (9) provided with drivers (15);
**characterized**
- **in that** the aperture (7) is delimited by mutually parallel front edges (10, 11) of the wall portions (3, 4) which are arranged to taper in a V shape towards the conveying means (8) and which open above the conveying means (8) or in a plane with the conveying means (8); and
- **in that** the drivers (15) take the form of cylindrical pins which are arranged spaced apart from one another in the direction of circulation of the conveying means (8) and which extend substantially perpendicularly to the conveying plane (9) of the conveying means (8).

2. Apparatus (1) according to Claim 1, **characterized in that** the aperture (7) has a width (B) between the wall portions (3, 4) that corresponds at least to the width of the drivers (15) and at most to the length of the piece goods.

3. Apparatus (1) according to either of Claims 1 and 2, **characterized in that** the drivers (15) have a circular or polygonal cross section.

4. Apparatus (1) according to one of Claims 1 to 3, **characterized in that**, in the direction of circulation of the conveying means (8), the drivers (15) are arranged so as to be offset alternately with respect to the longitudinal axis (16) of the conveying means (8) between its edge region and the longitudinal axis (16).

5. Apparatus (1) according to one of Claims 1 to 4, **characterized in that** piece goods conveyed from the conveying means (8) to the discharge plane are transferred to a downstream chute (13) which is arranged inclined at an angle to the horizontal and which has at least one channel (14) having a substantially U-shaped profile, wherein the cross section of the channel (14) is wider than the head and narrower than the length of the shank.

6. Apparatus (1) according to Claims 1 to 5, **characterized in that** the inclination of the conveying means (8) is greater than or equal to 30° and less than or equal to 60°.

7. Apparatus (1) according to one of Claims 1 to 6, **characterized in that** the aperture (7) extends substantially from the lowest point of the container (2) to the upper edge of the wall portions (3, 4).

8. Apparatus (1) according to one of Claims 5 to 7, **characterized in that** the at least one channel (14) has a coating which minimizes static friction.

9. Apparatus (1) according to one of Claims 1 to 8, **characterized in that** a sensor arrangement (22) is arranged in the discharge plane or at the height of the discharge plane or downstream of the discharge plane and is configured to detect geometric properties of the piece goods.

10. Apparatus (1) according to one of Claims 1 to 9, **characterized in that** the conveying means (8) can be driven electromechanically by an actuator.

11. Apparatus (1) according to one of Claims 1 to 9, **characterized in that** the conveying means (8) can be driven mechanically or pneumatically.

12. Apparatus (1) according to one of Claims 5 to 11, **characterized in that** the chute (13) has arranged downstream thereof a conveying device (17) which transports away the piece goods coming from the chute (13) at a conveying speed which is dependent on the drive speed of the conveying means (8) arranged in the container (2).

13. Apparatus (1) according to one of Claims 1 to 12, **characterized in that** the conveying means takes the form of a conveyor belt (8) or link chain.

14. Apparatus (1) according to Claim 12 or 13, **characterized in that** the conveying device (17) is drive-coupled to the conveying means (8).

15. Apparatus (1) according to one of Claims 12 to 14, **characterized in that** at least one separation element (20) is provided for subdividing a conveying surface of the conveying device (17) into two mutually spaced-apart, parallel conveying portions which are adapted to the spacing of two channels (14) from one another in the discharge region thereof.

## Revendications

1. Dispositif (1) de séparation et d'orientation de pièces en forme de broche présentant une tête et une tige, en particulier de rivets, comprenant :
- un récipient (2) ayant sensiblement la forme d'un entonnoir pour recevoir les pièces, comportant deux sections de paroi (3, 4) qui délimitent le récipient (2) dans une zone avant, et une paroi arrière (5), dans lequel les sections de paroi (3, 4) et la paroi arrière (5) sont disposées par sections de manière opposée et de manière respectivement inclinée vers l'extérieur en formant un certain angle par rapport au plan transversal central (6) du récipient (2) ;
- un moyen transporteur (8) tournant sans fin, disposé sous un évidement (7), en particulier en forme de fente, qui sépare les deux sections de paroi (3, 4), lequel est disposé de manière inclinée du même angle (α) que les sections de paroi (3, 4) par rapport au plan transversal central (6) et transporte les pièces depuis un plan de réception jusqu'à un plan de déchargement situé plus haut ;
- dans lequel le moyen transporteur (8) présente un plan de transport (9) muni d'organes d'entraînement (15) ;
**caractérisé**
- **en ce que** l'évidement (7) est délimité par des bords avant (10, 11), parallèles entre eux, des sections de paroi (3, 4), lesquelles sont disposées en forme de V et s'étendent vers le moyen transporteur (8) et s'ouvrent au-dessus du moyen transporteur (8) ou dans un plan formé avec le moyen transporteur (8), et
- **en ce que** les organes d'entraînement (15) sont réalisés sous la forme de broches cylindriques qui sont disposées à distance les unes des autres dans le sens de rotation du moyen transporteur (8) et qui s'étendent sensiblement perpendiculairement au plan de transport (9) du moyen transporteur (8).

2. Dispositif (1) selon la revendication 1, **caractérisé en ce que** l'évidement (7) présente entre les sections de paroi (3, 4) une largeur (B) qui correspond au moins à la largeur des organes d'entraînement (15) et au plus à la longueur des pièces.

3. Dispositif (1) selon l'une des revendications 1 ou 2, **caractérisé en ce que** les organes d'entraînement (15) présentent une section transversale circulaire ou polygonale.

4. Dispositif (1) selon l'une des revendications 1 à 3, **caractérisé en ce que** les organes d'entraînement (15) sont disposés de manière décalée alternativement dans le sens de rotation du moyen transporteur (8) par rapport à l'axe longitudinal (16) du moyen transporteur (8), entre sa zone de bord et l'axe longitudinal (16).

5. Dispositif (1) selon l'une des revendications 1 à 4, **caractérisé en ce que** les pièces transportées du moyen transporteur (8) au plan de déchargement sont transférées à un glissoir (13) disposé en aval et incliné par rapport à l'horizontale, qui présente au moins un conduit (14) ayant un profil sensiblement en forme de U, dans lequel la section transversale du conduit (14) est plus large que la tête et plus étroite que la longueur de la tige.

6. Dispositif (1) selon les revendications 1 à 5, **caractérisé en ce que** l'inclinaison du moyen transporteur (8) est supérieure ou égale à 30° et inférieure ou égale à 60°.

7. Dispositif (1) selon l'une des revendications 1 à 6, **caractérisé en ce que** l'évidement (7) s'étend sensiblement du point le plus bas du récipient (2) jusqu'au bord supérieur des sections de paroi (3, 4).

8. Dispositif (1) selon l'une des revendications 5 à 7, **caractérisé en ce que** ladite au moins un conduit (14) présente un revêtement qui minimise l'adhérence.

9. Dispositif (1) selon l'une des revendications 1 à 8, **caractérisé en ce qu'**un dispositif de détection (22), qui est conçu pour détecter des propriétés géométriques des pièces, est disposé dans le plan de déchargement ou à la hauteur du plan de déchargement ou en aval du plan de déchargement.

10. Dispositif (1) selon l'une des revendications 1 à 9, **caractérisé en ce que** le moyen transporteur (8) peut être entraîné de manière électromécanique par un actionneur.

11. Dispositif (1) selon l'une des revendications 1 à 9, **caractérisé en ce que** le moyen transporteur (8) peut être entraîné de manière mécanique ou pneumatique.

12. Dispositif (1) selon l'une des revendications 5 à 11, **caractérisé en ce qu'**en aval du glissoir (13) est disposé un dispositif transporteur (17) qui transporte les pièces provenant du glissoir (13) à une vitesse de transport qui dépend de la vitesse d'entraînement du moyen transporteur (8) disposé dans le récipient (2).

13. Dispositif (1) selon l'une des revendications 1 à 12, **caractérisé en ce que** le moyen transporteur est réalisé sous la forme d'une bande transporteuse (8) ou d'une chaîne à maillons.

14. Dispositif (1) selon la revendication 12 ou 13, **caractérisé en ce que** le dispositif transporteur (17) est couplé de manière entraînée au moyen transporteur (8).

15. Dispositif (1) selon l'une des revendications 12 à 14, **caractérisé en ce qu'**il est prévu au moins un élément de séparation (20) permettant de diviser une surface de transport du dispositif transporteur (17) en deux sections de transport parallèles et espacées l'une de l'autre, qui sont adaptées à la distance existant entre deux conduits (14) dans la zone de déchargement.
